(19) Europäisches Patentamt
European Patent Office
Office européen des brevets

(11) **EP 3 377 915 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **16815703.0**

(22) Anmeldetag: **08.11.2016**

(51) Int Cl.:
*G01S 7/35* (2006.01)     *G01S 13/34* (2006.01)
*G01S 13/42* (2006.01)     *G01S 13/58* (2006.01)
*G01S 13/87* (2006.01)     *G01S 13/93* (2006.01)
*H01Q 1/32* (2006.01)     *G01S 13/72* (2006.01)

(86) Internationale Anmeldenummer:
**PCT/DE2016/200504**

(87) Internationale Veröffentlichungsnummer:
**WO 2017/084661 (26.05.2017 Gazette 2017/21)**

(54) **RADARSYSTEM MIT VERSCHACHTELT SERIELLEM SENDEN UND PARALLELEM EMPFANGEN**

RADAR SYSTEM WITH INTERLEAVED SERIAL TRANSMISSION AND PARALLEL RECEPTION

SYSTÈME RADAR AVEC TRANSMISSION EN SÉRIE ET RÉCEPTION EN PARALLÈLE IMBRIQUÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2015 DE 102015222884**

(43) Veröffentlichungstag der Anmeldung:
**26.09.2018 Patentblatt 2018/39**

(73) Patentinhaber: **Conti Temic Microelectronic GmbH**
**90411 Nürnberg (DE)**

(72) Erfinder: **WINTERMANTEL, Markus**
**88131 Lindau (DE)**

(56) Entgegenhaltungen:
WO-A1-2010/066458     WO-A1-2013/034282
WO-A2-2010/000252     DE-B3-102011 009 874

• **ZOEKE DOMINIK ET AL: "Phase migration effects in moving target localization using switched MIMO arrays", 2015 EUROPEAN RADAR CONFERENCE (EURAD), EUMA, 9. September 2015 (2015-09-09), Seiten 85-88, XP032824509, DOI: 10.1109/EURAD.2015.7346243 [gefunden am 2015-12-02]**

# EP 3 377 915 B1

## Beschreibung

Die Erfindung bezieht sich auf ein Radarsystem zum Einsatz für Fahrerassistenzsysteme im Kraftfahrzeug. Das Radarsystem besitzt erfindungsgemäß eine Anordnung und ein Verfahren zum verschachtelt seriellen Senden und parallelen Empfangen auf jeweils mehreren Antennen mit einer Berücksichtigung von relativgeschwindigkeitsabhängigen Effekten für die digitale Strahlformung.

## Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Neben einer Erhöhung des Komforts stehen Sicherheitsfunktionen immer stärker im Fokus. Eine Gruppe bilden dabei Funktionen zur Reduzierung des Brems- bzw. Anhalteweges in Notsituationen; das Spektrum der entsprechenden Fahrerassistenzfunktionen reicht von einem automatischen Vorfüllen der Bremse zur Reduktion der Bremslatenz (Prefill), über einen verbesserten Bremsassistenten (BAS+) bis hin zur autonomen Notbremsung. Eine weitere Gruppe sind Spurwechselfunktionen: Sie warnen den Fahrer bzw. greifen in die Lenkung ein, wenn der Fahrer einen gefährlichen Spurwechsel durchführen möchte, also wenn sich ein Fahrzeug auf der Nebenspur entweder im toten Winkel befindet (wird als BSD - "Blind Spot Detection"-bezeichnet) oder sich schnell von hinten nähert (LCA - "Lane Change Assist").

Für Fahrerassistenzsysteme der oben beschriebenen Art werden heute vorwiegend Radarsensoren eingesetzt. Diese arbeiten auch bei schlechten Wetterbedingungen zuverlässig und können neben dem Abstand von Objekten auch direkt deren radiale Relativgeschwindigkeit über den Dopplereffekt messen. Als Sendefrequenzen werden dabei 24 und 77GHz eingesetzt.

Zur sicheren Umsetzung der obigen Funktionen ist eine hohe Detektionsqualität mit zuverlässiger Fahrspurzuordnung der Objekte nötig; dies erfordert eine genaue Winkelbildung. Die Winkelbildung wird heute üblicherweise durch mehrere Einzelantennen und deren Fusion durch digitale Strahlformung realisiert; je mehr Antennenkanäle diese Strahlformung benutzt, desto besser wird die Winkelbildung.

Um bei akzeptablem Hardware-Aufwand eine hohe Zahl an Antennenkanälen zu erhalten, werden vorzugsweise mehrere Sende- und mehrere Empfangsantennen benutzt. Bei geeigneter Anordnung ergibt sich die Zahl der Antennenkanäle der digitalen Strahlformung als Produkt aus Zahl der Sendeantennen und Zahl der Empfangsantennen. In den Schriften EP 000002294451 A2 und WO 2010/066458 A1 sind solche Anordnungen dargestellt.

EP 000002294451 A2 zeigt eine Anordnung und ein Verfahren, bei der die Sende- und die Empfangsantennen verschachtelt seriell betrieben werden - es wird in periodischem Wechseln also jeweils nur auf einer Antenne gesendet und auf einer Antenne empfangen. Der dafür nötige Hardware-Aufwand ist gering, aber nachteilig ist die geringere Sensorempfindlichkeit. Durch den zeitlich versetzten Betrieb der Antennenkanäle erzeugen relativ zum Sensor bewegte Objekte Phasenversätze zwischen den Antennenkanälen, was bei der Winkelbildung zu berücksichtigen ist; im Falle des in der Schrift dargestellten verschachtelt seriellen Senden und Empfangen ist das auf einfache Weise möglich. Alternativ wird in dieser Schrift auch noch das parallele Senden und Empfangen dargestellt; alle Sende- und Empfangsantennen werden also immer gleichzeitig betrieben. Damit erhöht sich die Sensorempfindlichkeit, aber auch der Hardware-Aufwand. Die Problematik von zeitlichen Versätzen hinsichtlich der Winkelbildung ergibt sich dann nicht mehr, dafür ist eine Trennung der von den unterschiedlichen Sendeantennen stammenden Empfangssignale über Modulation mit Hilfe von Phasenschaltern und anschließender digitaler Demodulation nötig.

In WO 2010/066458 A1 ist eine Auslegung dargestellt, welches zwischen den beiden obigen "Extremen" liegt: Es wird verschachtelt seriell gesendet und immer parallel empfangen, d.h., es ist immer nur abwechselnd eine Sendeantenne in Betrieb, aber immer gleichzeitig alle Empfangsantennen. Damit kann man eine gute Sensoremp-findlichkeit bei akzeptablem Hardware-Aufwand realisieren. Allerdings sind bei dieser Anordnung der zeitliche Versatz zwischen den Sendeantennen und seine Auswirkung auf die Winkelbildung nicht so einfach zu behandeln wie beim seriellen Senden und Empfangen. In dieser Schrift WO 2010/066458 A1 ist vorgeschlagen, zwei Antennenkanäle, welche unterschiedliche Sendeantennen benutzen, an den effektiv gleichen Ort zu legen, so dass der Phasenversatz deren Empfangssignale nur von der Relativbewegung der Objekte kommt und damit dann auch die relativgeschwindigkeitsbasierte Phasenversatz der anderen Antennenkanäle bekannt ist und kompensiert werden kann. Dieser Ansatz hat allerdings einige Nachteile, insbesondere kann nicht die maximale Anzahl an unterschiedlichen Antennenkanälen realisiert werden und bei schwachen Objekten und in Situationen mit mehreren gleich schnellen und gleich weit entfernten Objekten ist die Phasenversatzschätzung stark verrauscht bzw. verfälscht (da nur aus zwei Antennenkanälen bestimmt), was zu Winkelfehlern und Geisterzielen führen kann.

DE 10 2011 009 874 B3 zeigt ein Verfahren zur Sendesignaltrennung in Radarsystemen sowie ein zugehöriges Radarsystem. Bei dem Verfahren werden die Sendesignale mittels OFDM auf mehrere Subträger aufgeteilt, die den Sendeantennen nach einem Verteilungsschema zugeordnet werden. In diesem Verteilungsschema ist jeder Subträger nur einer Sendeantenne zugeordnet. Die jeweils jeder Sendeantenne zugeordneten Subträger sind über die gesamte Signalbandbreite verteilt.

Der Artikel "Phase Migration Effects in Moving Target Localizaion Using Switched MIMO Arrays" von Dominik Zoeke et all. in Proceedings of the 12th European Radar Conference offenbart eine multiple Eingangs- und Ausgangsantennenkonfiguration. Ferner werden verschiede Schaltschemen und deren Einfluss auf die Lokalisierung von bewegten Zielen diskutiert. Im Anschluss daran wird eine Schalttechnik für die Antennen basierend auf realen Messungen präsentiert, die einen bewegungsinduzierten Phasenfehler kompensiert.

**Aufgabe, Lösung und Vorteile der Erfindung**

Aufgabe der Erfindung ist es, beim verschachtelt seriellen Senden und parallelen Empfangen die oben beschriebenen Nachteile des bisher bekannten Ansatzes zur Berücksichtigung der relativgeschwindigkeitsbedingten Phasenversätze zwischen den Antennenkanälen zu überwinden.

Diese Aufgabe wird grundsätzlich mit Hilfe eines Verfahrens bzw. Radarsystems gemäß den Ansprüchen 1-5 gelöst.

Die Vorteile der Erfindung ergeben sich aus der Tatsache, dass für verschachtelt serielles Senden und paralleles Empfangen zum einen die maximal mögliche Anzahl an Antennenkanälen und somit optimale Genauigkeit und Auflösungsfähigkeit für die Winkelbildung realisiert werden können und zum anderen bei schwachen Objekten und in Situationen mit mehreren gleich schnellen und gleich weit entfernten Objekten die Winkelbildung nicht negativ beeinträchtigt wird.

**Kurzbeschreibung der Zeichnungen**

In Fig. 1 ist die beispielhafte Ausführungsform eines Radarsystems dargestellt.

Fig. 2 zeigt die Frequenz der Sende- und der Empfangssignale, welche aus sogenannten Frequenzrampen besteht, sowie die jeweils benutzten Antennenkombinationen bestehend aus Sende- und Empfangsantennen.

Fig. 3 zeigt ein abgetastetes Signal bei Anwesenheit von zwei Objekten vor der ersten DFT (links) und nach der ersten DFT (rechts).

In Fig. 4 ist der über die Frequenzrampen rotierende komplexe Spektralwert im Entfernungstor 4, in welchem sich genau ein Objekt befindet, dargestellt.

Fig. 5 zeigt schematisch das zweidimensionale komplexwertige Spektrum e(j,l,m) nach der zweiten DFT für eine Antennenkombination m.

Fig. 6 zeigt die unterschiedlichen Weglängen zwischen den Einzelantennen und einem weit entfernten relativ zum Sensor ruhenden Objekt bei einem Azimutwinkel $\alpha_{Az} < 0$.

Fig. 7a zeigt eine Antennenanordnung mit einer Sende- und 8 Empfangsantennen, welche zur betrachteten Antennenanordnung nach Fig. 1 mit 2 Sende- und 4 Empfangsantennen äquivalent ist; in Fig. 7b sind für diese äquivalente Anordnung die unterschiedlichen Weglängen zwischen den Einzelantennen und einem weit entfernten relativ zum Sensor ruhenden Objekt dargestellt.

Fig. 8a zeigt für die obigen Antennenanordnungen den über die Antennenkombinationen rotierenden komplexen Spektralwert im Entfernung-Relativgeschwindigkeit-Tor (9,0), in welchem sich genau ein Objekt (relativ zum Sensor ruhend) befindet; in Fig. 8b ist betragsmäßig das zugehörige Spektrum nach der dritten DFT dargestellt.

Fig. 9 zeigt schematisch die Datenanordnung vor der dreidimensionalen DFT (links) und das dreidimensionale komplexwertige Spektrum w(j,l,n) danach (rechts).

Fig. 10 zeigt für ein Objekt in 9m Entfernung und mit der Relativgeschwindigkeit 0km/h betragsmäßig die Verläufe der Winkelspektren w(9,l,n) in den beiden Relativgeschwindigkeitstoren l=0 und l=256, wobei als Fensterfunktion für die dritte DFT ein Tschebyscheff-Fenster mit 20dB Nebenkeulenunterdrückung verwendet ist.

**Ausführungsbeispiel**

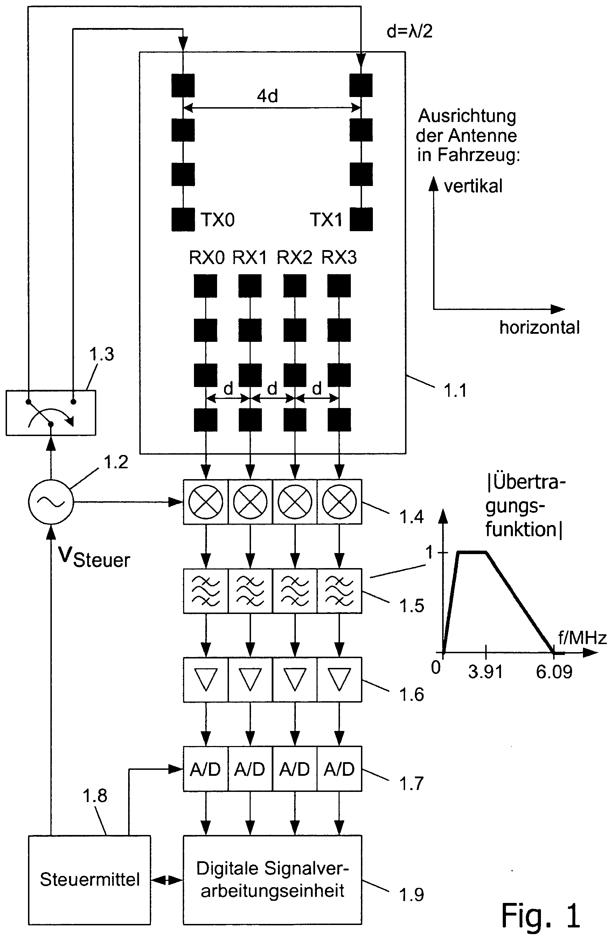

Betrachtet wird die beispielhafte Ausführung eines Radarsystems, welches in Fig. 1 grob dargestellt ist. Das Radarsystem besitzt 2 Sendeantennen TX0 und TX1 zur Abstrahlung von Sendesignalen und 4 Empfangsantennen RX0-RX3 zum Empfang von an Objekten reflektierten Sendesignalen; die Antennen sind auf einer ebenen Platine 1.1 in planarer Technologie als Patchantennen ausgeführt, wobei diese Platine bezüglich horizontaler und vertikaler Richtung im Fahrzeug wie im Bild dargestellt orientiert ist. Alle Antennen (Sende- und Empfangsantennen) haben in Elevation und Azimut dieselbe Strahlcharakteristik. Die 4 Empfangsantennen (und damit ihre Phasen-, also Abstrahlzentren) haben jeweils gleichen lateralen, d. h. horizontalen Abstand d = $\lambda$/2 = 6.2mm zueinander, wobei $\lambda$ = c/24.15GHz = 12.4mm die mittlere Wellenlänge der abgestrahlten Signale ist; der horizontale Abstand der beiden Sendeantennen zueinander ist 4-mal so groß, beträgt also 4d = 2$\lambda$.

Über den Multiplexer 1.3 kann jeweils eine der beiden Sendeantennen selektiert werden. Die auf der jeweils selektierten Sendeantenne abgestrahlten Sendesignale werden aus dem Hochfrequenz-Oszillator 1.2 im 24GHz-Bereich gewonnen, welcher über eine Steuerspannung $v_{Steuer}$ in seiner Frequenz verändert werden kann; die Steuerspannung wird in den Steuermitteln 1.8 erzeugt.

Die von den vier Empfangsantennen empfangenen Signale werden parallel verarbeitet. Zuerst werden sie in den reellwertigen Mischern 1.4 ebenfalls mit dem Signal des Oszillators 1.2 in den Niederfrequenzbereich heruntergemischt. Danach durchlaufen die Empfangssignale jeweils einen der Bandpassfilter 1.5 mit der dargestellten Übertragungsfunktion, einen der Verstärker 1.6 und einen der A/D-Wandler 1.7; anschließend werden sie in einer digitalen Signalverarbeitungseinheit 1.9 weiterverarbeitet. Es sei betont, dass die parallel Verarbeitung der vier Empfangsantennen gegenüber einer seriellen Verarbeitung ein viermal längeres Aufakkumulieren der Empfangssignale zulässt, was die Sensorempfindlichkeit um 6dB erhöht.

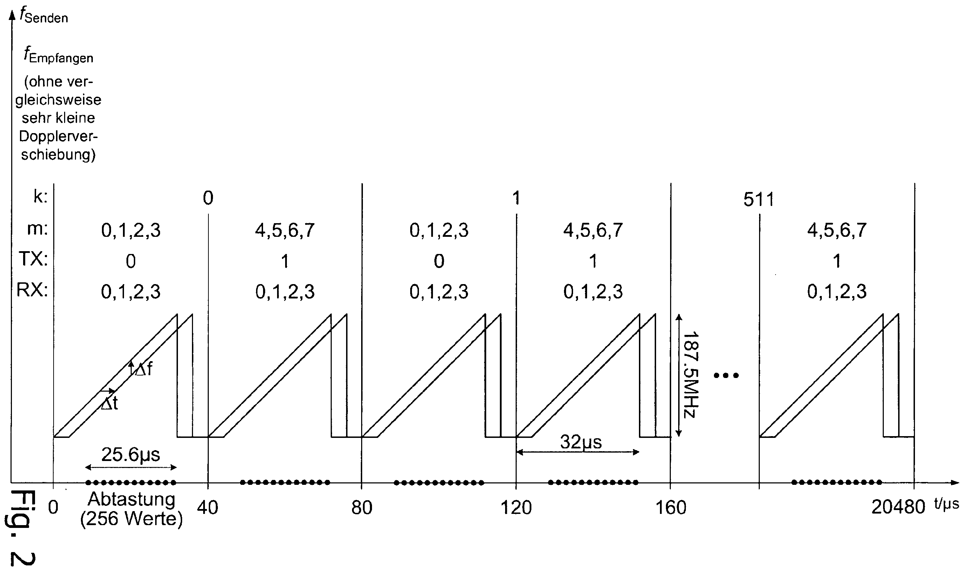

Damit die Entfernung von Objekten gemessen werden kann, wird - wie in Fig. 2 dargestellt - die Frequenz des Hochfrequenz-Oszillators und damit der Sendesignale sehr schnell linear verändert (in 32$\mu$s um 187.5MHz); man spricht dabei von einer Frequenzrampe. Die Frequenzrampen werden periodisch wiederholt (alle 40$\mu$s); insgesamt gibt es 512 Frequenzrampen. Über die Frequenzrampen werden die zwei Sendeantennen alternierend betrieben, d.h. vor jeder Frequenzrampe wird auf die jeweils andere Sendeantenne umgeschaltet. In Fig. 2 ist k die Laufvariable über die 512/2 = 256 Frequenzrampen pro Sendeantenne und m = 4·$m_{TX}$+$m_{RX}$ die Laufvariable über die 8 Antennenkombinationen TX$m_{TX}$/RX$m_{RX}$.

Das Empfangssignal eines einzelnen punktförmigen Objekts ist nach Mischung und damit auch am A/D-Wandler für jede Frequenzrampe und jeden der vier Empfangskanäle eine sinusförmige Schwingung; dies kann man sich mit Hilfe von Fig. 2 wie folgt erklären: Hat das Objekt die radiale Relativgeschwindigkeit Null zum Radarsystem, so ist die Frequenzdifferenz $\Delta$f zwischen gesendetem Signal und empfangenem Signal konstant und dabei proportional zur Signallaufzeit $\Delta$t und damit proportional zur radialen Entfernung r = c·$\Delta$t/2, wobei c die Lichtgeschwindigkeit ist und der Faktor 1/2 berücksichtigt, dass sich die Laufzeit $\Delta$t auf das Hin- und Zurücklaufen der Welle bezieht; die Frequenzdifferenz $\Delta$f ergibt sich bei obiger Auslegung zu $\Delta$f = 2r/c·187.5MHz/32$\mu$s = r·39.0625kHz/m. Da das empfangene Signal in jedem Empfangskanal mit der Oszillator- und damit Sendefrequenz gemischt wird, ergibt sich nach dem Mischer jeweils eine sinusförmige Schwingung mit der Frequenz $\Delta$f. Diese Frequenz liegt im MHz-Bereich und wird bei einer nichtverschwindenden radialen Relativgeschwindigkeit noch um die Dopplerfrequenz verschoben, welche aber nur im kHz-Bereich liegt und deshalb gegenüber dem Frequenzanteil durch die Objektentfernung näherungsweise vernachlässigbar ist. Gibt es mehrere Objekte, so ist das Empfangssignal eine Überlagerung mehrerer sinusförmiger Schwingungen unterschiedlicher Frequenz.

Während jeder Frequenzrampe werden in allen 4 Empfangskanälen die Empfangssignale am A/D-Wandler 256 mal jeweils im Abstand von 100ns (also mit 10 MHz) abgetastet (siehe Fig. 2). Wie aus Fig. 2 ersichtlich ist, macht eine Signalabtastung nur in dem Zeitbereich Sinn, wo Empfangssignale von Objekten im interessierenden Entfernungsbereich eintreffen - nach Rampenstart muss also wenigstens die zur maximal interessierenden Entfernung korrespondierende Laufzeit abgewartet werden (bei einer maximalen Entfernung von 150m entspricht dies 1$\mu$s); es sei bemerkt, dass hier und im Folgenden unter Entfernung immer die radiale Entfernung verstanden ist.

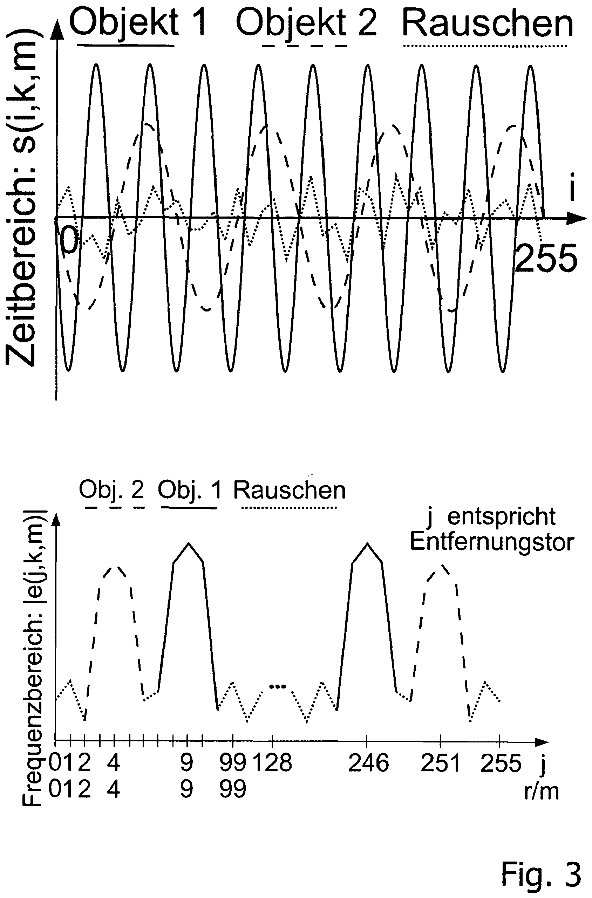

Dann wird über die 256 Abtastwerte jeder Frequenzrampe und jedes Empfangskanals eine diskrete Fouriertransformation (DFT) in Form einer schnellen Fouriertransformation (FFT = Fast Fourier Transform) gebildet. Dadurch kann man Objekte in unterschiedlichen Entfernungen, welche zu unterschiedlichen Frequenzen führen, trennen (siehe Fig. 3; links Signal s(i,k,m) vor DFT bei Anwesenheit von zwei Objekten, rechts Betrag |e(j,k,m)| von Ergebnis der DFT; dabei ist k die Laufvariable über die Frequenzrampen pro Sendeantenne und m die Laufvariable über die die 8 Antennenkombinationen TX$m_{TX}$/RX$m_{RX}$). Jede der diskreten Frequenzstützstellen j der DFT korrespondiert zu einer Entfernung r und kann deshalb analog zu Pulsradaren auch als Entfernungstor bezeichnet werden; bei obiger Auslegung haben die Entfernungstore gerade einen Abstand und damit eine Breite $\Delta$r von einem Meter (ergibt sich aus $\Delta$r·39.0625kHz/m = 1/(256·100ns)). In den Entfernungstoren, in welchen sich Objekte befinden, treten in der DFT Leistungsspitzen auf. Da die abgetasteten Empfangssignale reellwertig sind (dann in oberer Hälfte der DFT keine zusätzliche Information, da symmetrisch) und der obere Übergangsbereich der analogen Bandpassfilter 1.5 eine Frequenzbandbreite von 2.1875MHz hat (entspricht dem Bereich von 56 Frequenzstützstellen), können nur 100 der 256 diskreten Frequenzstützstellen weiterverarbeitet werden (es sei bemerkt, dass beliebig schmale Übergangsbereiche von Filtern nicht realisierbar sind). Die Filter 1.5 dämpfen kleine Frequenzen und somit die Empfangssignale von nahen Objekten, um eine Übersteuerung der Verstärker 1.6 und der A/D-Wandler 1.7 zu vermeiden (die an den Antennen empfangenen Signale werden mit abnehmendem Objektabstand ja stärker).

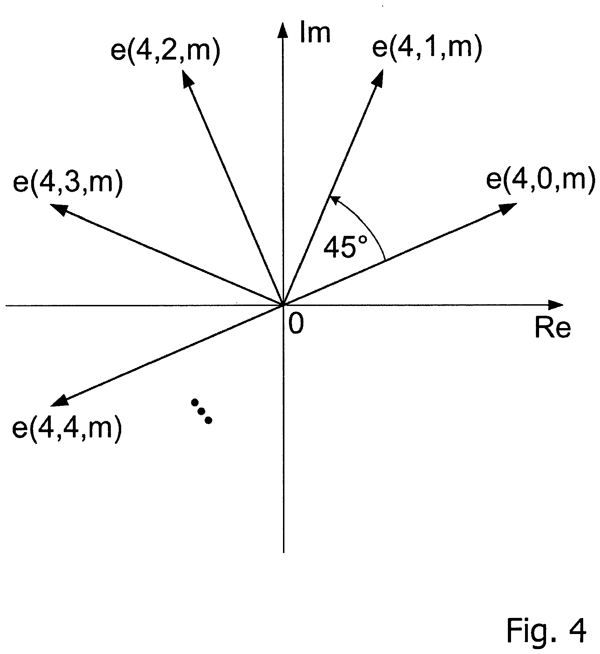

Über die 256 Frequenzrampen (k = 0,1,...,255) pro Sendeantenne $m_{TX}$ ($m_{TX}$ = 0,1) fallen in jedem Empfangskanal $m_{RX}$ ($m_{RX}$ = 0,1,2,3) für jedes Entfernungstor j (also jede der 100 betrachteten Frequenzstützstellen) komplexe Spektralwerte e(j,k,m) an. Gibt es in der zu einem Entfernungstor korrespondierenden Entfernung genau ein Objekt, so rotiert der komplexe Spektralwert in diesem Entfernungstor j über die 256 Frequenzrampen jeder der 8 Antennenkombinationen m= 0,1,...,7 mit der Dopplerfrequenz, da sich von Frequenzrampe zu Frequenzrampe die Entfernung (im mm-Bereich oder darunter) und damit die Phasenlage der zugehörigen Schwingung gleichförmig ändert (siehe Fig. 4; die dort dargestellte Phasenänderung von 45° pro Frequenzrampe korrespondiert zu einer Entfernungsänderung des Objekts von $\lambda/(8\cdot2)$ = 0.78mm, wobei die Wellenlänge $\lambda$ = c/24.15GHz = 12.4mm ist und der Faktor 2 im Nenner das Hin- und Zurücklaufen der Wellen berücksichtigt, woraus sich die radiale Relativgeschwindigkeit $v_{rel}$ = 0.78mm/80$\mu$s = 35km/h ergibt; positives Vorzeichen der radialen Relativgeschwindigkeit ist als Annäherung definiert). Mehrere Objekte mit unterschiedlicher radialer Relativgeschwindigkeit im selben Entfernungstor werden dadurch getrennt, dass für jede Antennenkombination und jedes Entfernungstor über die in den 256 Frequenzrampen anfallenden komplexen Spektralwerte eine zweite DFT gerechnet wird. Jede diskrete Frequenzstützstelle I dieser zweiten DFT korrespondiert zu einem Satz von Dopplerfrequenzen (wegen der Abtastung der Dopplerfrequenz kann sie nur bis auf ein unbekanntes ganz-zahliges Vielfaches ihrer Abtastfrequenz bestimmt werden) und somit einem Satz von radialer Relativgeschwindigkeiten $v_{rel}$ von Objekten, so dass die diskreten Frequenzstützstellen der zweiten DFT als Relativgeschwindigkeitstore bezeichnet werden können; für die radiale Relativgeschwindigkeit wird ab hier zur sprachlichen Vereinfachung der Zusatz "radial" weggelassen. Der Eindeutigkeitsbereich der Relativgeschwindigkeit ergibt sich aus 2·$v_{rel,EB}$ ·80 $\mu$s=12.4mm zu $v_{rel,EB}$ = 280km/h. Damit sind dem Relativgeschwindigkeitstor I die Relativgeschwindigkeiten $v_{rel}$=(I/256+p)·280km/h zugeordnet, wobei p ganzzahlig ist.

Die zweite DFT dient nicht nur zur Ermittlung der Relativgeschwindigkeit, sondern sie erhöht durch ihre Integration auch die Detektionsempfindlichkeit - bei 256 Frequenzrampen etwa um 10·$\log_{10}$(256) = 24dB.

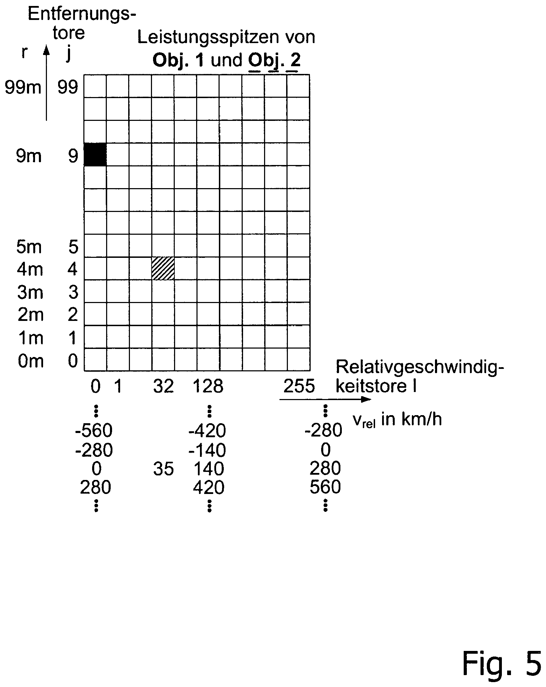

Nach dieser zweiten DFT für die Relativgeschwindigkeiten ergibt sich für jede Antennenkombination m ein zweidimensionales komplexwertiges Spektrum v(j,l,m), wobei die einzelnen Zellen als Entfernung-Relativgeschwindigkeit-Tore bezeichnet werden können und durch Objekte Leistungsspitzen am jeweils zugehörigen Entfernung-Relativgeschwindigkeit-Tor auftreten (siehe Fig. 5).

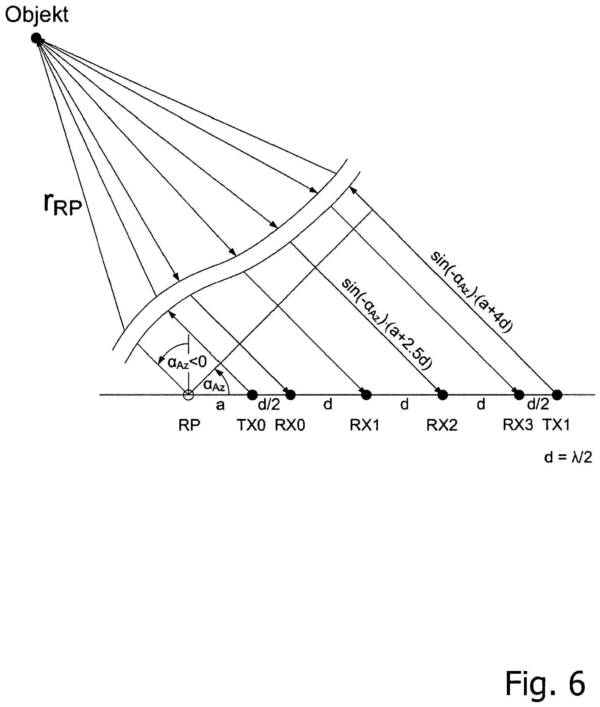

Schließlich wird dann noch die Information aus den 8 Antennenkombinationen fusioniert. Die von den beiden Sendeantennen stammenden, an einem einzelnen punktförmigen Objekt reflektierten Wellen kommen an den 4 Emp-fangsantennen abhängig vom Azimutwinkel $\alpha_{Az}$ mit unterschiedlichen Phasenlagen zueinander an, da die Entfernungen zwischen Objekt und Sende- sowie Empfangsantennen leicht unterschiedlich sind. Dies wird nun näher erläutert, wobei das betrachtete Objekt zuerst relativ zum Sensor ruhen soll, d. h., es hat die Relativgeschwindigkeit Null. In Fig. 6 sind in vertikaler Projektion die Phasenzentren der Antennen sowie die Strahlengänge zu einem weit entfernten relativ zum Sensor ruhenden Objekt bei Azimutwinkel $\alpha_{Az}$ < 0 (positives $\alpha_{Az}$ bedeute rechts der Lotfläche zur Platinenebene) und Elevationswinkel $\alpha_{El}$ = 0 (in der horizontalen Lotfläche zur Platinenebene) dargestellt; das Objekt ist so weit entfernt, dass die Strahlengänge als parallel angenommen werden können, d. h., das Objekt befindet sich im Fernfeld der Antennenanordnung. Die Weglänge r(m) für die Antennenkombination m = 4·$m_{TX}$+$m_{RX}$ von der Sendeantenne TXm$_{TX}$ zum Objekt und zurück zur Empfangsantenne RXm$_{RX}$ ergibt sich zu

$$r(m) = 2\cdot r_{RP} + \sin(-\alpha_{Az})\cdot(a+m_{TX}\cdot4d+a+d/2+m_{RX}\cdot d) = 2\cdot r_{RP} + \sin(-\alpha_{Az})\cdot(2a+d/2+m\cdot d) \, ,$$

wobei $r_{RP}$ die Weglänge von einem Referenzpunkt RP auf der Antennenplatine zum Objekt und a der horizontale Abstand zwischen Referenzpunkt und Sendeantenne TX0 ist. Aus dieser Beziehung sieht man, dass sich der Abstand linear mit der Nummer m der Antennenkombination verändert. Die Größe (2a+d/2+m·d) stellt den horizontalen Abstand des sogenannten relativen Phasenzentrums der Antennenkombination m zum Referenzpunkt RP dar und ist die Summe aus horizontalem Abstand der zugehörigen Sende- und Empfangsantenne zum Referenzpunkt (das relative Phasenzentrum einer Kombination einer Sende- und einer Empfangsantenne ist hier definiert als Summe der beiden Vektoren von einem Referenzpunkt zu den Phasenzentren der Sende- und der Empfangsantenne).

Der Phasenunterschied ($\varphi$(m)-$\varphi$(0)) zwischen den Empfangswellen für die Antennenkombination m=0,1,...,7 und die Antennenkombination m=0 ergibt sich auf Grund der unterschiedlichen Weglängen r(m) zu

$$\varphi(m)-\varphi(0) \; = \; -2\pi/\lambda \cdot [r(m) - r(0)]$$

$$= \; -2\pi/\lambda \cdot [2 \cdot r_{RP} + \sin(-\alpha_{Az}) \cdot (2a+d/2+m \cdot d) - 2 \cdot r_{RP} - \sin(-\alpha_{Az}) \cdot (2a+d/2+0 \cdot d)]$$

$$= \; -2\pi/\lambda \cdot \sin(-\alpha_{Az}) \cdot d \cdot m \; = \; 2\pi/\lambda \cdot \sin(\alpha_{Az}) \cdot d \cdot m$$

und verändert sich somit ebenfalls linear mit der Nummer m der Antennenkombination. Die Amplitude der auf den unterschiedlichen Antennenkombinationen empfangenen Signale ist konstant, da alle Antennen gleiche Strahlcharakteristik haben und der Abstand der Antennen zum weit entfernten Objekt für eine Pegelbetrachtung nur vernachlässigbar gering differiert.

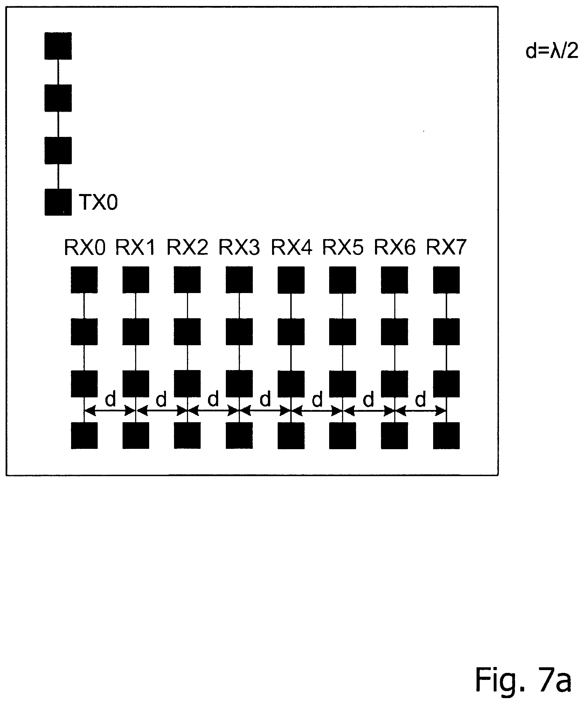

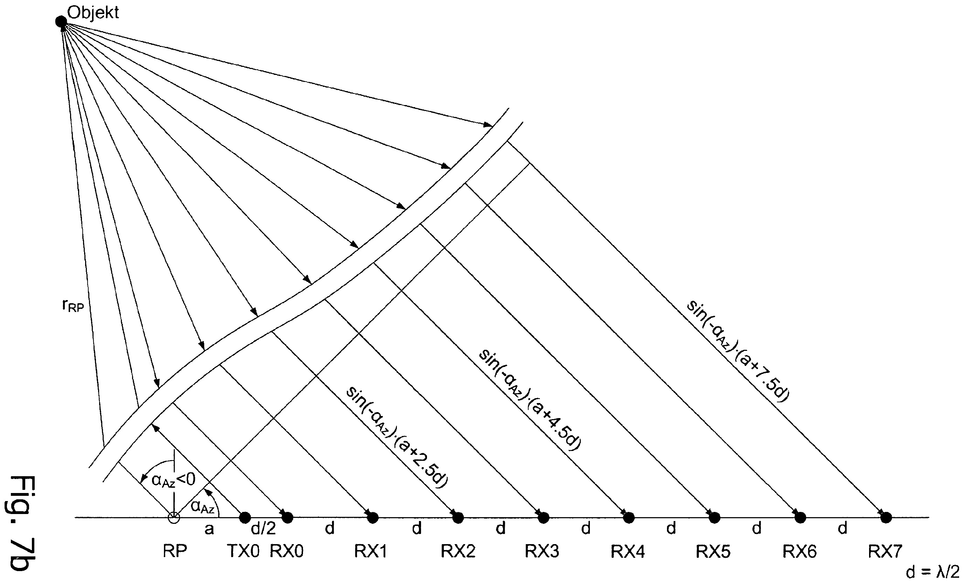

Wie unmittelbar ersichtlich ist, ergeben sich für die in Fig. 7a dargestellte Antennenanordnung mit vertikaler Projektion nach Fig. 7b genau dieselben Beziehungen für die Weglänge r(m) und den Phasenunterschied $\varphi(m)-\varphi(0)$ wie für die bisher betrachtete Anordnung nach Fig. 1; die Anordnung nach Fig. 7a hat nur eine Sendeantenne TX0 und 8 äquidistante Empfangsantennen RX0-RX7, wobei die Antennenkombination m = $m_{RX}$ nun aus der Sendeantenne und der Empfangsantenne RX$m_{RX}$ gebildet wird. Wegen identischer Einzelantennen und identischen Phasenbeziehungen der Antennenkombinationen zueinander sind beide Antennenanordnungen bezüglich der Winkelmessfähigkeit äquivalent. Die hier vorgestellte Anordnung nach Fig. 1 hat aber den Vorteil, dass sie fast nur die halbe horizontale Ausdehnung im Vergleich zur konventionellen Anordnung nach Fig. 7a aufweist, wodurch sich die Sensorgröße signifikant reduzieren lässt. Außerdem weist die Anordnung nach Fig. 1 weniger Antennen insgesamt auf (6 statt 8 Antennen), was auch im Zusammenhang mit den zugehörigen Schaltungsteilen preisliche Vorteile bewirkt. Nachteilig für die Anordnung nach Fig. 1 ist, dass die Empfangssignale zu den beiden Sendeantennen nicht zeitgleich akquiriert werden - die daraus entstehende Problematik und deren erfindungsgemäße Lösung werden später dargestellt.

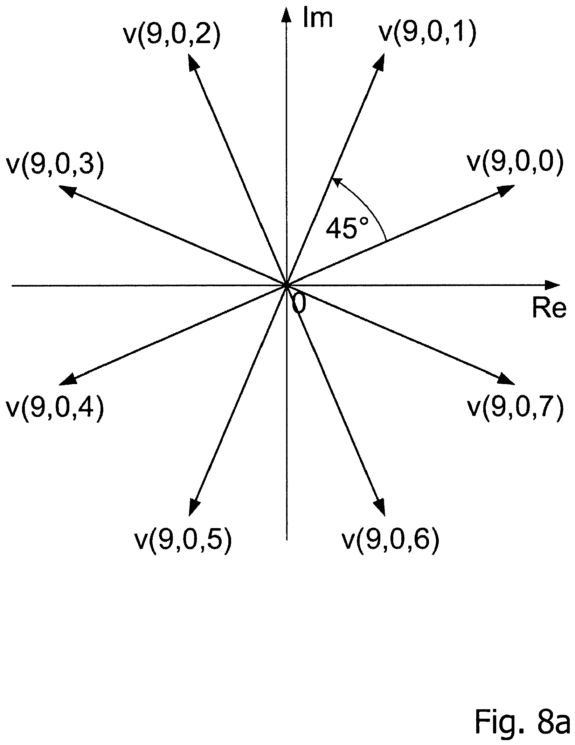

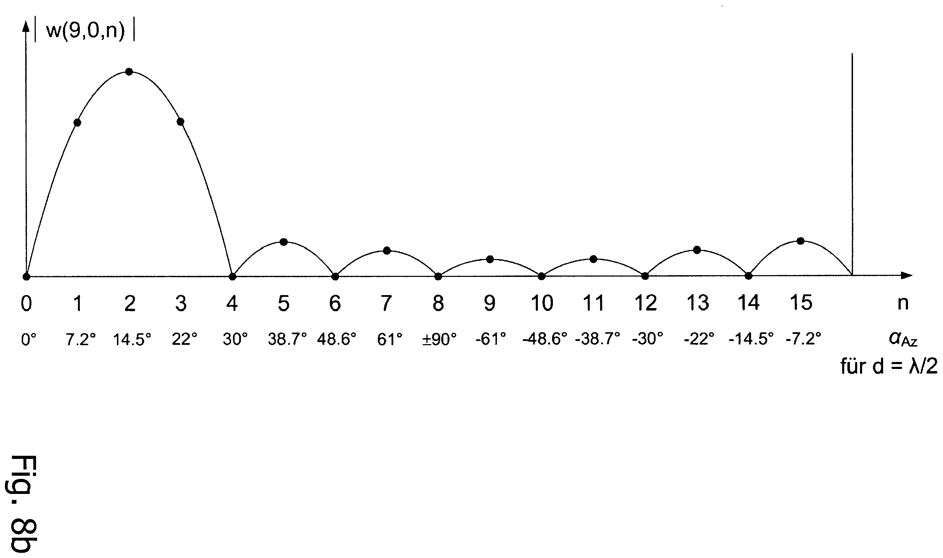

Die über die 8 Antennenkombinationen m linear zu- bzw. abnehmenden azimutwinkelabhängigen Phasenunterschiede $\varphi(m)-\varphi(0)$ bleiben abgesehen von eventuellen konstanten und damit kompensierbaren Phasenverschiebungen (z.B. durch unterschiedliche Leitungslängen) bis nach der zweiten DFT erhalten; gibt es also in einem Entfernung-Relativgeschwindigkeit-Tor (j,l) nur ein Objekt, so rotiert der dortige komplexe Spektralwert v(j,l,m) über die 8 Antennenkombinationen m = 0,1,...,7 mit konstanter, vom Azimutwinkel abhängiger Drehgeschwindigkeit (siehe als Beispiel Fig. 8a). Deshalb kann man in jedem Entfernung-Relativgeschwindigkeit-Tor eine digitale Strahlformung für die Azimutrichtung durchführen. Dazu bildet man Summen über die komplexen Werte zu den 8 Antennenkombinationen, welche jeweils mit einem Satz komplexer Faktoren mit linear sich ändernder Phase multipliziert werden; abhängig von der linearen Phasenänderung des jeweiligen Faktorensatzes resultieren Strahlungskeulen mit unterschiedlichen Strahlrichtungen. Die Strahlbreite dieser Strahlungskeulen ist deutlich geringer als diejenige der Einzelantennen. Die oben beschriebene Summation wird durch eine 16-Punkte-DFT realisiert, wobei die 8 Werte der 8 Antennenkombinationen durch 8 Nullen ergänzt werden. Die diskreten Frequenzwerte n = 0,1,...,15 dieser DFT korrespondieren zu unterschiedlichen Phasendifferenzen $\Delta\varphi = \varphi(m)-\varphi(m-1) = 2\pi \cdot n/16$ zwischen benachbarten Antennenkombinationen und damit zu unterschiedlichen Azimutwinkeln $\alpha_{Az} = \arcsin(\Delta\varphi \cdot \lambda/(2\pi d)) = \arcsin(n \cdot \lambda/(16d))$ und können deshalb als Winkeltore bezeichnet werden. In Fig. 8b ist betragsmäßig der Verlauf w(j,l,n) des Spektrums der dritten DFT für die Verhältnisse nach Fig. 8a dargestellt, welche sich auf ein punktförmiges Objekt unter dem Azimutwinkel $\alpha_{Az}$ = 14.5° beziehen (zum dargestellten Phasenunterschied zwischen benachbarten Antennenkombinationen von 45°, was $\pi/4$ entspricht, korrespondieren n = 2 und für d = $\lambda/2$ der Azimutwinkel $\alpha_{AZ}$ = $\arcsin(\pi/4)$ = 14.5°). Die dritte DFT dient nicht nur zur Ermittlung des Azimutwinkels, sondern sie erhöht durch ihre Integration auch die Detektionsempfindlichkeit - bei 8 Antennenkombinationen etwa um $10 \cdot \log_{10}(8)$ = 9dB.

Bisher wurde für die Bestimmung des Azimutwinkels angenommen, dass das Objekt die Relativgeschwindigkeit Null hat. Falls dies nicht der Fall ist, ändert sich die Phase zwischen den Empfangssignalen zu den beiden um jeweils 40$\mu$s zeitlich versetzt aktivierten Sendeantennen noch zusätzlich proportional zur im folgenden als konstant angenommen Relativgeschwindigkeit, da sich die Entfernung während diesem Zeitraum jeweils leicht ändert. Dieser Phasenversatz innerhalb 40$\mu$s ist $\Delta\varphi_{TX} = 2 \cdot V_{rel} \cdot 40\mu s/\lambda \cdot 360° = v_{rel}/(560km/h) \cdot 2\pi$ ($\Delta\varphi_{TX}$ hier in Einheit Radiant). Da alle Frequenzrampen zur Sendeantenne TX1 um 40$\mu$s zu den Frequenzrampen zur Sendeantenne TX0 verzögert sind, besitzt die Phase der sich nach der 2. FFT ergebenden komplexen Spektralwerte v(j,l,m) für die zu der Sendeantenne TX1 gehörigen Antennenkombinationen m=4,5,6,7 den zusätzlichen Phasenanteil $\Delta\varphi_{TX}$ gegenüber den zu der Sendeantenne TX0 gehörigen Antennenkombinationen m=0,1,2,3.

Dieser Phasenversatz ist vor der digitalen Strahlformung zu kompensieren, d.h., die komplexen Spektralwerte v(j,l,m) für die zu der Sendeantenne TX1 gehörigen Antennenkombinationen m=4,5,6,7 sind mit dem komplexen Einheitsvektor $e^{\wedge}(-i \cdot \Delta\varphi_{TX})$ zu multiplizieren, wobei i die imaginäre Einheit ist. Wie oben erläutert, stellt die Laufvariable l der komplexen Spektralwerte v(j,l,m) Relativgeschwindigkeitstore dar und ist dabei den Relativgeschwindigkeiten $v_{rel}$ = (l/256+p)·280km/h zugeordnet, wobei das ganzzahlige p die Laufvariable für die Mehrdeutigkeit der Relativgeschwindigkeit darstellt (so sind dem Relativgeschwindigkeitstor l=0 z.B. die Relativgeschwindigkeiten ..., -560km/h, -280km/h, 0km/h, +280km/h, +560km/h, ... zugeordnet). Der Phasenversatz $\Delta_{\varphi TX}$ = $v_{rel}$/(560km/h)·$2\pi$ ergibt sich damit in Abhängigkeit vom Relativgeschwindigkeitstor l und der Laufvariablen p für die Mehrdeutigkeit der Relativgeschwindigkeit zu $\Delta\varphi_{TX}$ = (l/256+p)·$\pi$. Damit ist der bei der digitalen Strahlformung anzuwendende Korrekturfaktor e^(-i·$\Delta\varphi_{TX}$) für zu der Sendeantenne TX1 gehörigen Antennenkombinationen abhängig von der Laufvariable p für die Mehrdeutigkeit der Relativgeschwindigkeit. Additive ganzzahlige Vielfache von $2\pi$ in $\Delta\varphi_{TX}$ sind für den Korrekturfaktor ^e^(-i·$\Delta\varphi_{TX}$) allerdings ohne Einfluss, so dass man nur zwischen zwei verschiedenen Korrekturfaktoren unterscheiden muss: Korrekturfaktor e^(-i·(l/256)·$\pi$) für geradzahlige p und Korrekturfaktor e^(-i·(l/256+1)·$\pi$) = -e^(-i·(l/256)·$\pi$) für ungeradzahlige p; die beiden Korrekturfaktoren sind also in der Phase um $\pi$ gedreht, also um eine halbe Umdrehung.

Das kann man sich auch wie folgt veranschaulichen: Die Abtastzeit für die zweite DFT zur Bestimmung der Relativgeschwindigkeit ist 80$\mu$s (Abstand der Rampen für jeweils selbe Sendeantenne); der zeitliche Versatz zwischen den beiden Sendeantennen ist mit 40$\mu$s die Hälfte davon. Der sich aus der zweiten DFT ergebende Phasenversatz ist also zu halbieren, um den relativgeschwindigkeitsbedingten Phasenversatz zwischen den beiden TX zu bekommen. Da Phasen aber nur bis auf ganzzahlige Vielfache von $2\pi$ genau bestimmt werden können, bleibt für den auf den Eindeutigkeitsbereich von $2\pi$ abgebildete Phasenversatz der beiden Sendeantenne eine Unsicherheit von $\pi$, d.h., man muss zwei um $\pi$ unterschiedliche Phasenhypothesen betrachten.

Die dritte FFT für die digitale Strahlformung, also für die Bestimmung des Azimutwinkels, ist somit für jedes der 256 Relativgeschwindigkeitstore pro Entfernungstor zweimal durchzuführen, und zwar mit den beiden Korrekturfaktoren +e^(-i·(l/256)·$\pi$) und +e^(-i·(l/256)·$\pi$) für die zur Sendeantenne TX1 gehörigen Antennenkombinationen m=4,5,6,7. Zu den beiden Korrekturfaktoren gehören zwei unterschiedliche Sätze an Relativgeschwindigkeiten; nach der digitalen Strahlformung ergeben sich also 512 Relativgeschwindigkeitstore.

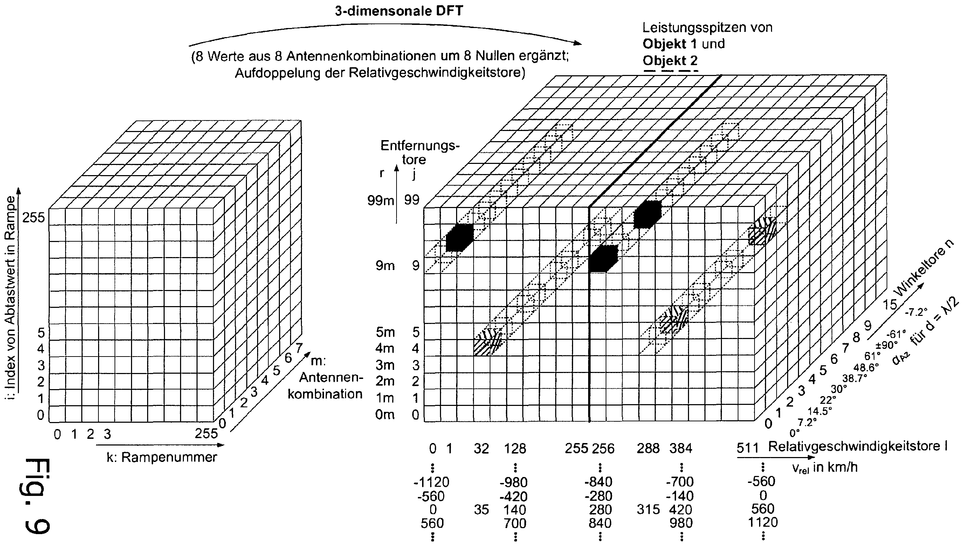

Nach dieser dritten DFT für die Azimutwinkel ergibt sich ein dreidimensionales komplexwertiges Spektrum w(j,l,n), wobei die einzelnen Zellen als Entfernung-Relativgeschwindigkeit-Winkel-Tore bezeichnet werden können und durch Objekte Leistungsspitzen am jeweils zugehörigen Entfernung-Relativgeschwindigkeit-Winkel-Tor auftreten (siehe Fig. 9; links Datenanordnung vor dreidimensionaler DFT, rechts danach). Durch die Aufdoppelung der Relativgeschwindigkeitstore bei der digitalen Strahlformung tritt durch jedes Objekt in zwei um 256 beabstandeten Relativgeschwindigkeitstoren Leistung auf (s.u. für weitere Behandlung dieses Effekts).

Durch Bestimmung der Leistungsspitzen kann man also Objekte detektieren und ihre Maße Entfernung, Relativgeschwindigkeit (abgesehen von Mehrdeutigkeiten) und Azimutwinkel ermitteln. Da Leistungsspitzen bedingt durch die DFT-Fensterungen auch in benachbarten Zellen noch Pegel aufweisen, kann man die Objektmaße durch Interpolation in Abhängigkeit dieser Pegel noch wesentlich genauer als die Torbreiten bestimmen. Es sei bemerkt, dass die Fensterfunktionen der drei DFTs so gewählt werden, dass einerseits die Leistungsspitzen nicht zu breit werden (für eine genügende Objekttrennung), aber andererseits auch die Nebenkeulen der Fensterspektren nicht zu hoch werden (um auch schwach reflektierende Objekte in Anwesenheit stark reflektierender Objekte erkennen zu können). Aus der Höhe der Leistungsspitzen kann als viertes Objektmaß noch dessen Reflektionsquerschnitt geschätzt werden, welcher angibt, wie stark das Objekt die Radarwellen reflektiert. Bedingt durch das in jedem System vorhandene Rauschen (z.B. durch thermisches Rauschen) ergibt sich nach der dreidimensionalen DFT auch ohne empfangene Objektreflektionen ein gewisses Leistungsniveau; dieses Rauschniveau, welche durch statistische Effekte in gewissem Maße variiert, stellt die untere physikalische Grenze der Detektionsfähigkeit dar. Die Detektionsschwelle, oberhalb welcher aus Leistungsspitzen Objekte gebildet werden, wird etwa 12dB über das mittlere Rauschen gelegt.

Bisher wurden primär punktförmige Objekte (also weder in Breite, noch in Länge ausgedehnt) mit konstanter radialer Relativgeschwindigkeit und ohne laterale Bewegung betrachtet. Dann sind die Leistungsspitzen nach der dreidimensionalen Fouriertransformation "scharf"; ihre Form entspricht der dreidimensionalen diskreten Fouriertransformierten der Fensterfunktionen verschoben an die Position der drei Objektgrößen Geschwindigkeit, Entfernung und Winkel - bezogen auf jeweils eine der Dimensionen Geschwindigkeit, Entfernung und Winkel ist die Form der Leistungsspitzen die eindimensionale diskrete Fouriertransformierte der jeweiligen Fensterfunktion verschoben an die jeweilige Objektgröße. Objekte, für welche die obigen Bedingungen nicht gelten, weisen nach der dreidimensionalen Fouriertransformation "verschwommene" Leistungsspitzen auf.

Die beschriebene Detektion von Objekten und die Bestimmung der zugehörigen Objektmaße stellen einen Messzyklus dar und liefern ein Momentanbild des Umfeldes; dies wird etwa alle 40ms zyklisch wiederholt. Zur Beurteilung der Umfeldsituation werden die Momentanbilder über aufeinanderfolgende Zyklen hinweg verfolgt, gefiltert und ausgewertet; Gründe dafür sind insbesondere:

- einige Größen können nicht direkt in einem Zyklus, sondern nur aus der Änderung über aufeinanderfolgenden Zyklen bestimmt werden (z. B. Längsbeschleunigung und Quergeschwindigkeit),

- die Bewegung von Objekten kann über mehrere Zyklen plausibilisiert werden, woraus eine robustere und sicherere Umfeldbeschreibung resultiert; so muss z. B. die sich über aufeinanderfolgende Zyklen ergebende Änderung der (radialen) Entfernung zur gemessenen (radialen) Relativgeschwindigkeit passen, was Redundanz und damit zusätzliche Sicherheit in der Umfeldbeschreibung ergibt,

• Verringerung von Messrauschen durch zeitliche Filterung über mehrere Zyklen.

Das Verfolgen und Filtern von Objektdetektionen über aufeinanderfolgende Zyklen wird auch als Tracking bezeichnet. Dabei werden für jedes Objekt aus den getrackten Objektmaßen des aktuellen Zyklus Werte für den nächsten Zyklus prädiziert. Diese Prädiktionen werden mit den im nächsten Zyklus als Momentaufnahme detektierten Objekte und deren Objektmaße verglichen, um diese passend einander zuzuordnen. Dann werden die zum selben Objekt gehörigen prädizierten und gemessenen Objektmaße fusioniert, woraus sich die aktuellen getrackten Objektmaße ergeben, welche somit über aufeinanderfolgende Zyklen gefilterte Werte darstellen. Falls bestimmte Objektmaße in einem Zyklus nicht eindeutig bestimmt werden können, sind beim Tracking die unterschiedlichen Hypothesen zu berücksichtigen. Aus den getrackten Objekten und den zugehörigen getrackten Objektmaßen wird die Umfeldsituation für die jeweilige Fahrerassistenzfunktion analysiert und interpretiert, um daraus die entsprechenden Aktionen abzuleiten.

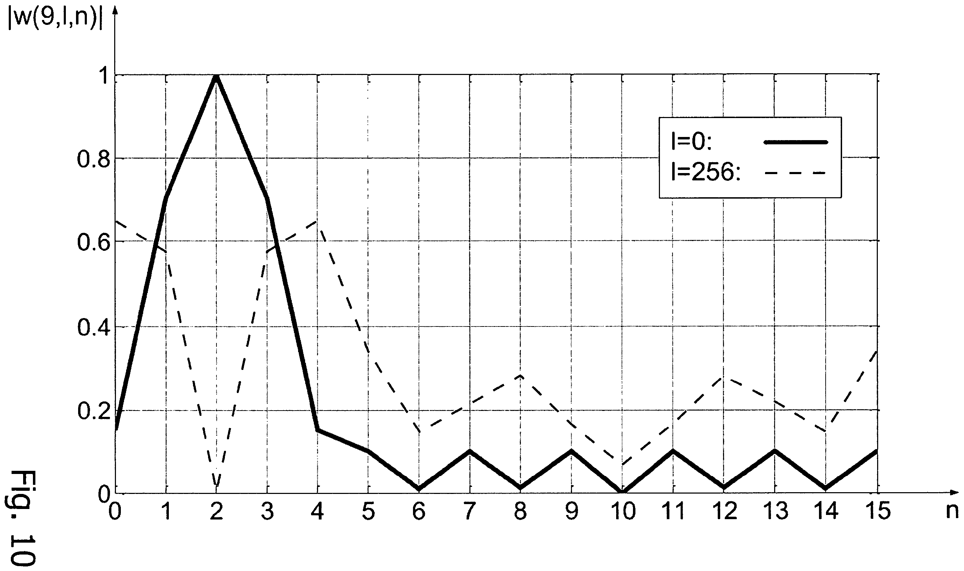

Nun soll noch erläutert werden, wie mit dem oben beschriebenen Effekt umgegangen werden kann, dass ein Objekt im dreidimensionalen komplexwertigen Spektrum w(j,l,n) in zwei um 256 beabstandeten Relativgeschwindigkeitstoren Leistung generiert. Wie in Fig. 9 angedeutet, erzeugt z.B. ein punktförmiges Objekt in der Entfernung r=9m, mit der Relativgeschwindigkeit $v_{rel}$=0km/h und unter dem Azimutwinkel $\alpha_{Az}$ = 14.5° Leistungsspitzen in den Relativgeschwindigkeitstoren l=0 und l=256 mit den zugehörigen Sätzen an möglichen Relativgeschwindigkeiten. In Fig. 10 sind betragsmäßig die Verläufe der sogenannten Winkelspektren w(9,l,n) in den beiden Relativgeschwindigkeitstoren l=0 und l=256 genauer dargestellt, wobei als Fensterfunktion für die dritte DFT ein Tschebyscheff-Fenster mit 20dB Nebenkeulenunterdrückung verwendet ist. Für das Relativgeschwindigkeitstor l=0, welches die tatsächliche Relativgeschwindigkeitshypothese $v_{rel}$=0km/h beinhaltet, ergibt sich eine einzige scharfe Leistungsspitze - der Verlauf des Winkelspektrums entspricht der diskreten Fouriertransformierten der verwendeten Fensterfunktion verschoben an den Winkel $\alpha_{Az}$ = 14.5° des Objekts, so wie man es für das angenommene punktförmige Objekt erwartet. Für das andere Relativgeschwindigkeitstor l=256, welches die tatsächliche Relativgeschwindigkeitshypothese $v_{rel}$=0km/h nicht beinhaltet, ergibt sich eine doppelte Leistungsspitze - für diese "falsche" Relativgeschwindigkeitstor-Hypothese ist der verwendete Korrekturfaktor für die zur Sendeantenne TX1 gehörigen Antennenkombinationen m=4,5,6,7 um den Faktor -1 "falsch", d.h., zwischen den ersten und den zweiten vier Antennenkombinationen wird ein zusätzlicher "falscher" Phasensprung von $\pi$ eingefügt, wodurch am Maximum des "richtigen" Spektrums (welches sich ohne diesen Phasensprung ergibt) eine Nullstelle erzeugt und die Leistung in zwei gleich hohe Peaks um die Nullstelle herum gedrängt wird; dieses Winkelspektrum passt also nicht zum für ein punktförmiges Objekt erwarteten Verlauf.

Ein mögliches Kriterium für die Unterscheidung zwischen richtiger und falscher Relativgeschwindigkeitstor-Hypothese ist also die bessere Übereinstimmung zum Spektrum eines punktförmigen Objekts, welches der diskrete Fouriertransformierte der verwendeten Fensterfunktion verschoben an den Azimutwinkel des Objekts entspricht. Dazu kann man aus der Literatur bekannte parametrische Signalschätzverfahren verwenden. Diese Bestimmung der richtigen Hypothese wird sinnvollerweise nur in Relativgeschwindigkeitstoren gemacht, in welchen eine Leistungsspitze über der Detektionsschwelle liegt. Dann ist auch die Wahrscheinlichkeit gering, dass das überlagerte Systemrauschen zur Auswahl der falschen Hypothese führt. Liegt ein Szenario vor, wo mehrere Objekte Leistung im selben Entfernungs- und Relativgeschwindigkeitstor ausbilden, dann kann dieses Kriterium mit einer geringen Wahrscheinlichkeit zur falschen Hypothese leiten; bei einer Systemauslegung wie der beispielhaft hier vorgeschlagenen ist die Wahrscheinlichkeit für ein solches Szenario wegen der hohen Auflösung in Entfernung und Relativgeschwindigkeit aber schon ohnehin gering.

In Fig. 10 ist der Pegel der Beträge der Winkelspektren auf das Maximum für die tatsächliche, also richtige Hypothese des Relativgeschwindigkeitstors normiert, d.h. dieses Maximum liegt beim Wert 1; das Pegelniveau der Doppelspitze der falschen Relativgeschwindigkeitstor-Hypothese liegt dann bei etwa dem Wert 0.64, also knapp 4dB tiefer. Man kann zwischen richtiger und falscher Relativgeschwindigkeitstor-Hypothese also auch dadurch unterscheiden, dass man die Pegel der Maxima der beiden betragsmäßigen Winkelspektren vergleicht - das Winkelspektrum mit dem höheren Betragsmaximum gehört zur richtigen Hypothese. Dieses Verfahren ist deutlich einfacher zu implementieren als die meisten parametrischen Signalschätzverfahren, aber trotzdem recht robust.

Die bisher vorgestellten Ansätze bestimmen die richtige Relativgeschwindigkeitstor-Hypothese auf Detektionsebene, also in einem Messzyklus. Durch das Vergleichen bzw. Verfolgen von Detektionen über aufeinanderfolgende Messzyklen, also insb. durch Tracking, ergeben sich weitere Methoden.

Der einfachste Ansatz dabei ist, dass man beide Relativgeschwindigkeitstor-Hypothesen trackt und dann die Hypothese verwirft, deren Änderung der gemessenen Entfernung sich als nicht konsistent zur Relativgeschwindigkeitstor-Hypothese erweist.

Zu jedem der 512 Relativgeschwindigkeitstore korrespondieren mehrere zumindest theoretische Relativgeschwindigkeiten; bei der hier betrachteten Auslegung haben diese Relativgeschwindigkeiten ein Raster von 560km/h, so dass es im normalen Straßenverkehr immer nur eine realistischerweise mögliche Hypothese pro Relativgeschwindigkeitstor gibt. Bei anderen Auslegungen (z.B. größerer Abstand der Frequenzrampen oder Radarfrequenz im 77GHz-Band) ist dem aber nicht so, d.h., es gibt pro Relativgeschwindigkeitstor mehrere mögliche Hypothesen. Zur Bestimmung der richtigen dieser Hypothesen kann man auch wieder das normale Tracking nutzen, also basierend aus dem Vergleich zwischen der Änderung der gemessenen Entfernung und der angenommen Relativgeschwindigkeitshypothese. Im Allgemeinen braucht dieser Ansatz aber mehrere Messzyklen zur Bestimmung der richtigen Hypothese und benötigt signifikanten Rechenaufwand. In DE 102009016480 A1 ist ein Verfahren erläutert, wir man die Bestimmung der richtigen Relativgeschwindigkeitshypothese effektiver und besser realisieren kann. Dazu wird von Messzyklus zu Messzyklus der Abstand der Frequenzrampen variiert; dadurch ist das Raster der Mehrdeutigkeiten der Relativgeschwindigkeit von Messzyklus zu Messzyklus unterschiedlich und über zwei Messzyklen hinweg bestätigt sich nur die richtige Hypothese (also nur diese eine Hypothese ist in den Hypothesensätzen der beiden Messzyklen enthalten).

Diesen Ansatz der Variation des Rampenabstandes von Messzyklus zu Messzyklus kann man nun auch dazu benutzen, die richtige der beiden Relativgeschwindigkeitstor-Hypothesen bedingt durch den zeitlichen Versatz zwischen den beiden Sendeantennen zu bestimmen. In der bisher betrachteten Auslegung haben die Frequenzrampen einen zeitlichen Abstand von 40μs, woraus für die beiden Relativgeschwindigkeitstor-Hypothesen ein Versatz von 280km/h resultiert. Wird nun der Rampenabstand im nächsten Messzyklus um z.B. 10% auf 44 μs erhöht, dann reduziert sich der Versatz der beiden Relativgeschwindigkeitstor-Hypothesen auf 255km/h; damit kann sich über zwei Messzyklen hinweg nur die richtige Relativgeschwindigkeitstor-Hypothese bestätigen - für die falsche Relativgeschwindigkeitstor-Hypothese bildet sich die Leistung nicht im erwarteten Relativgeschwindigkeitstor ab.

Die eben beschriebene Bestimmung der richtigen Relativgeschwindigkeits(tor)-Hypothese muss man prinzipiell nur bei der Neuaufnahme eines Objekts durchführen. Hat man ein Objekt dann eindeutig aufgenommen, also die korrekte Relativgeschwindigkeitshypothese bestimmt, dann kann in den weiteren Messzyklen im Tracking bei der Assoziation untersuchen, ob unter den möglichen Relativgeschwindigkeitshypothesen einer vom Ort (Entfernung, Winkel) her zum getrackten Objekt passenden Detektion eine passende Relativgeschwindigkeitshypothese vorhanden ist und die anderen verwerfen.

Die jeweils 256 Frequenzrampen pro Sendesignal sind im betrachteten Beispiel ineinander verschachtelt. Man könnte prinzipiell auf die Idee kommen, erst 256 Frequenzrampen mit einer Sendeantenne zu machen und danach 256 Frequenzrampen mit der anderen; die Sendeantennen wären also nicht verschachtelt seriell, sondern voll seriell betrieben. Dann ist der zeitliche Versatz zwischen den Sendeantennen allerdings viel größer, so dass Ungenauigkeiten in der Messung der Relativgeschwindigkeit und radiale Relativbeschleunigungen von Objekten zu unannehmbar großen Fehlern in der Bestimmung des relativgeschwindigkeitsbedingten Phasenversatzes zwischen den Empfangssignalen der beiden Sendeantennen führen würde und somit das Resultat der digitale Strahlformung unannehmbar stark verfälscht wäre. Deshalb ist der verschachtelte Betrieb der Sendeantennen essentieller Teil des erfindungsgemäßen Ansatzes.

Anhand des obigen Beispiels wurde die erfindungsmäßige Grundidee vorgestellt: Um eine digitale Strahlformung für hohe Winkelgenauigkeit bzw. -auflösung über eine große Zahl an Antennenkanälen realisieren zu können, ohne dass die Zahl der Einzelantennen und die benötigte Fläche sowie der benötigte Hardware-Aufwand zu groß wird, werden mehrere Sende- und mehrere Empfangsantennen benutzt und so angeordnet, dass sich die Zahl der Antennenkanäle als Produkt der Zahl der Sendeantennen mal der Zahl der Empfangsantennen ergibt. Für eine hohe Sensorempfindlichkeit werden alle Empfangsantennen gleichzeitig betrieben und ihre empfangenen Signale ausgewertet. Die Sendeantennen werden abwechselnd betrieben, um so die zugehörigen Empfangssignale separieren zu können. Für eine korrekte digitale Strahlformung muss berücksichtigt werden, dass der zeitliche Versatz zwischen den Sendeantennen zu einem Phasenversatz in Abhängigkeit der Relativgeschwindigkeit führt, welcher zu korrigieren ist. Bedingt durch Mehrdeutigkeiten sind für diesen Phasenversatz i. Allg. verschiedene Hypothesen zu betrachten, die zu verschiedenen Relativgeschwindigkeitshypothesen korrespondieren. Zur Bestimmung der richtigen Hypothese kann einer der vorgestellten Ansätze benutzt werden.

Für den Fachmann ist es unmittelbar ersichtlich, dass diese Idee ausgehend vom oben ausführlich dargestellten Beispiel auf andere Bemessungen und Auslegungen verallgemeinert werden kann; einige Beispiele:

- Statt zwei Sendeantennen kann man auch mehr Sendeantennen (Anzahl NS) benutzen. Dann ist die digitale Strahlformung NS-mal pro Relativgeschwindigkeitstor nach der zweiten DFT durchzuführen und aus den NS Relativgeschwindigkeitstor-Hypothesen die richtige zu bestimmen.

- Parameter der Sendesignale (z.B. Mittenfrequenz) und des zeitlichen Ablaufs (z.B. Abstand der Frequenzrampen) können auch leicht zwischen Frequenzrampen variieren, was insbesondere zur Unterdrückung von Störungen durch externe Einstrahlung oder interne Störquellen beiträgt.

- Für signifikant nichtäquidistanten Abstand der Frequenzrampen werden anderen Spektralanalyseverfahren als die DFT eingesetzt.

- Anstatt einer Frequenzmodulation kann auch eine Amplitudenmodulation in Form von kurzen Sendeimpulsen verwendet werden, wobei die Entfernungstore direkt durch zeitliche Abtastung des Empfangssignals gebildet werden.

- Man kann auch gleichzeitig jeweils NG>=2 Sendeantennen betreiben, wenn man deren Sendesignale für eine spätere Separierung zueinander moduliert (z.B. über die Phase). Dann wird zwischen NS>=2 solcher Gruppen an gleichzeitig betriebenen Sendeantennen periodischen umgeschaltet; insgesamt gibt es also NSxNG Sendeantennen. Nach Separierung der von gleichzeitig betriebenen Sendeantennen stammenden Empfangssignalen durch Demodulation kann man dann die digitale Strahlformung über NGxNSxNE Antennenkombinationen durchführen, wobei man nun die Phasenversätze zwischen den Sendeantennengruppen zu betrachten hat.

- Die Rollen von Sende- und Empfangsantennen können auch vertauscht sein, d.h., dass die Empfangsantennen abwechselnd und die Sendeantennen gleichzeitig betrieben werden.

- Neben 24GHz können auch andere Frequenzbänder benutzt werden, insb. das 77- und 79GHz-Band.


**Patentansprüche**

1.  Verfahren zur Umfelderfassung eines Kraftfahrzeugs mit den Schritten:

    - Abstrahlen von Sendesignalen mit NS≥2 Sendeantennen, wobei die betrachteten Sendesignale aus eine Folge von N jeweils gleicher oder ähnlicher Einzelsignale bestehen,
    - Empfangen von an Objekten reflektierten Sendesignalen mit NE>=2 Empfangsantennen und
    - Prozessieren der empfangenen Signale,

    wobei

    - nur jeweils auf einer der NS Sendeantennen gesendet wird, wobei von Einzelsignal zu Einzelsignal die verwendete Sendeantenne zyklisch wechselt und innerhalb jeder der NP=N/NS Perioden des zyklischen Sendeantennenwechsels der zeitliche Ablauf zumindest näherungsweise derselbe ist und zum Empfang von an Objekten reflektierten Einzelsignalen immer alle betrachteten NE Empfangsantennen parallel benutzt werden,

    **dadurch gekennzeichnet, dass**

    - die jeweils NP empfangenen Einzelsignale für die NSxNE verschiedenen Kombinationen aus Sende- und Empfangsantennen zu mehreren Relativgeschwindigkeitshypothesen von Objekten phasenrichtig aufakkumuliert werden,
    - über diese zu jeweils gleicher Relativgeschwindigkeitshypothese gehörigen NSxNE aufakkumulierten Werte der verschiedenen Kombinationen aus Sende- und Empfangsantennen eine digitale Strahlformung durchgeführt wird und dabei diejenigen Phasendifferenzen berücksichtigt werden, welche sich zwischen den Empfangssignalen zu den verschiedenen Sendeantennen durch deren zeitlichen Versatz wegen dem zyklischen Sendeantennenwechsel ergeben und welche von der jeweiligen Relativgeschwindigkeitshypothese abhängig sind,
    - die betrachteten NSxNP Sendesignale zumindest näherungsweise in einem zeitlich äquidistanten Raster liegen,
    - das phasenrichtige Aufakkumulieren der jeweils NP empfangenen Einzelsignale für die NSxNE verschiedenen Kombinationen aus Sende- und Empfangsantennen über eine diskrete Fouriertransformation (DFT) durchgeführt wird, wobei jede Frequenzstützstellen der DFT zu einer Gruppe von äquidistanten Relativgeschwindigkeitshypothesen korrespondiert,
    - eine digitale Strahlformung über die NSxNE DFT-Werte einer jeweiligen Frequenzstützstelle mehrfach mit unterschiedlichen Phasendifferenzen durchgeführt wird, da es für die Phasendifferenzen zwischen den Empfangssignalen zu den verschiedenen Sendeantennen für jede Frequenzstützstelle NS verschiedene Hypothesen gibt, welche im limitierten Phaseneindeutigkeitsbereich von 360° unterscheidbar sind, wobei diese unterschiedlichen Phasendifferenzhypothesen zu unterschiedlichen Untergruppen der Relativgeschwindigkeitshypothesen dieser Frequenzstützstelle korrespondieren,

        - wobei in einer ersten Alternative diejenige der unterschiedlichen Phasendifferenzhypothesen einer DFT-Frequenzstützstelle selektiert wird, für welche das Resultat der digitalen Strahlformung am besten zu der Hypothese eines einzelnen punktförmigen Objekts passt, oder

- wobei in einer zweiten Alternative diejenige der unterschiedlichen Phasendifferenzhypothesen einer DFT-Frequenzstützstelle selektiert wird, welche das größte Maximum im Resultat der digitalen Strahlformung aufweist, oder

- in einer dritten Alternative die richtige der unterschiedlichen Phasendifferenzhypothesen dadurch bestimmt wird, dass über zwei oder mehr Messzyklen die zugehörigen unterschiedlichen Relativgeschwindigkeitshypothesen mit der Änderung der gemessenen Entfernung des Objekts und/oder mit der schon bekannten Relativgeschwindigkeit des Objekts verglichen werden, oder

- in einer vierten Alternative der Abstand der einzelnen Sendesignale von Messzyklus zu Messzyklus variiert und bei welchem die richtige der unterschiedlichen Phasendifferenzhypothesen dadurch bestimmt wird, dass über zwei Messzyklen die zugehörigen unterschiedlichen variierenden Relativgeschwindigkeitshypothesen miteinander verglichen werden.

2. Verfahren nach der ersten oder zweiten Alternative in Anspruch 1, bei welchem nur die selektierte Phasendifferenzhypothese einer DFT-Frequenzstützstelle und die zugehörigen Untergruppe an Relativgeschwindigkeitshypothesen weiter betrachtet werden.

3. Verfahren nach einem der obigen Ansprüche, bei welchem

- die Frequenz der abgestrahlten Einzelsignale linear moduliert wird,

- jedes der NP empfangenen Einzelsignale für die NSxNE verschiedenen Kombinationen aus Sende- und Empfangsantennen in äquidistantem Raster NAmal abgetastet und über diese NA Abtastwerte eine erste DFT gebildet wird und

- bei jeder Frequenzstützstelle dieser ersten DFT über die jeweils NP Empfangssignale eine zweite DFT bestimmt wird, wobei jede Frequenzstützstellen zweiten DFT zu einer Gruppe von äquidistanten Relativgeschwindigkeitshypothesen korrespondiert.

4. Verfahren nach einem der obigen Ansprüche, bei welchem es NS>=2 Gruppen von jeweils NG>=2 gleichzeitig betriebenen und signalmäßig zueinander modulierten Sendeantennen gibt, die von verschiedenen gleichzeitig betriebenen Sendeantennen stammenden Empfangssignale durch Demodulation separiert werden und die digitale Strahlformung über NGxNSxNE Antennenkombinationen durchgeführt wird.

5. Radarsystem zur Umfelderfassung eines Kraftfahrzeugs mit

- Sendemitteln zur Abstrahlung von Sendesignalen mit NS≥2 Sendeantennen, Empfangsmitteln zum Empfang von an Objekten reflektierten Sendesignalen mit NE>=2 Empfangsantennen und
- Signalverarbeitungsmitteln zur Prozessierung der empfangenen Signale,

wobei

- nur jeweils ein der NS Sendeantennen sendebereit ist, wobei insbesondere von Einzelsignal zu Einzelsignal die verwendete Sendeantenne zyklisch wechseltbar und innerhalb jeder der NP=N/NS Perioden des zyklischen Sendeantennenwechsels der zeitliche Ablauf zumindest näherungsweise identisch ist, die NE Empfangsantennen zum parallelen Empfang von an Objekten reflektierten Einzelsignalen benutztbar sind,

**dadurch gekennzeichnet, dass**

- die jeweils NP empfangenen Einzelsignale für die NSxNE verschiedenen Kombinationen aus Sende- und Empfangsantennen zu mehreren Relativgeschwindigkeitshypothesen von Objekten phasenrichtig aufakkumulierbar sind, und
- über diese zu jeweils gleicher Relativgeschwindigkeitshypothese gehörigen NSxNE aufakkumulierten Werte der verschiedenen Kombinationen aus Sende- und Empfangsantennen eine digitale Strahlformung durchführbar ist und dabei diejenigen Phasendifferenzen berücksichtigbar ist, welche sich zwischen den Empfangssignalen zu den verschiedenen Sendeantennen durch deren zeitlichen Versatz wegen dem zyklischen Sendeantennenwechsel ergeben und welche von der jeweiligen Relativgeschwindigkeitshypothese abhängig sind, wobei die Signalverarbeitungsmittel ferner dazu eingerichtet sind, ein Verfahren der Ansprüche 1 bis 4 auszuführen.

**Claims**

1. A method for the environmental detection of a motor vehicle, having the steps of:

   - emitting transmission signals using NS≥2 transmitting antennas, wherein in each case, the considered transmission signals consist of a sequence of N identical or similar single signals,
   - receiving transmission signals reflected off objects using NE>=2 receiving antennas and
   - processing the received signals,

   wherein

   - in each case, transmitting is done on only one of the NS transmitting antennas, wherein from single signal to single signal, the transmitting antenna used alternates cyclically, and within each of the NP=N/NS periods of the cyclical transmitting antenna alternation, the temporal progression is at least approximately the same and in order to receive single signals reflected off objects, all considered NE receiving antennas are always used in parallel,

   **characterized in that**

   - each of the NP received single signals are accumulated in proper phase for the NSxNE different combinations of transmitting and receiving antennas to multiple relative speed hypotheses of objects,
   - by way of said NSxNE accumulated values, each belonging to the same relative speed hypothesis, from different combinations of transmitting and receiving antennas a digital beam forming is carried out, and those phase differences which arise between the receive signals to the different transmitting antennas due to the temporal offset thereof because of the cyclical transmitting antenna alternation, and which depend on the respective relative speed hypothesis, are thereby taken into consideration
   - the considered NSxNP transmission signals at least approximately lie in a temporally equidistant raster,
   - the accumulation in proper phase of each of the NP received single signals for the NSxNE different combinations of transmitting and receiving antennas is carried out by way of a discrete Fourier transform (DFT), wherein each frequency node of the DFT corresponds to a group of equidistant relative speed hypotheses,
   - a digital beam forming by way of the NSxNE DFT values of a respective frequency node is carried out multiple times with different phase differences, since there are NS different hypotheses for the phase differences between the receive signals to the different transmitting antennas for each frequency node, which hypotheses can be distinguished in the limited phase uniqueness range of 360°, wherein said different phase difference hypotheses correspond to different subgroups of the relative speed hypotheses of said frequency node,
   - wherein in a first alternative, that one of the different phase difference hypotheses of a DFT frequency node is selected for which the result of the digital beam forming best fits the hypothesis of an individual dot-shaped object, or
   - wherein in a second alternative, that one of the different phase difference hypotheses of a DFT frequency node is selected which has the greatest maximum in the result of the digital beam forming, or
   - in a third alternative, the correct one of the different phase difference hypotheses is determined **in that** the associated different relative speed hypotheses are compared with the change in the measured distance of the object and/or with the already known relative speed of the object over two or more measuring cycles, or
   - in a fourth alternative, the interval of the individual transmission signals is varied from measuring cycle to measuring cycle and in which the correct one of the different phase difference hypotheses is determined **in that** the associated different varying relative speed hypotheses are compared with one another over two measuring cycles.

2. The method in accordance with the first or second alternative in Claim 1, in which only the selected phase difference hypothesis of a DFT frequency node and the associated subgroup of relative speed hypotheses are taken into further consideration.

3. The method according to any one of the above claims, in which

   - the frequency of the emitted single signals is linearly modulated,
   - each of the NP received single signals for the NSxNE different combinations of transmitting and receiving antennas in the equidistant raster is sampled NA times and a first DFT is formed by way of said NA sampling values, and

- for each frequency node of said first DFT, a second DFT is determined by way of the NP receive signals in each case, wherein each frequency node second DFT corresponds to a group of equidistant relative speed hypotheses.

**4.** The method according to any one of the above claims, in which there are NS>=2 groups each with NG>=2 transmitting antennas which are operated simultaneously and modulated with respect to one another with regard to signals, the receive signals originating from different simultaneously operated transmitting antennas are separated by demodulation and the digital beam forming is carried out by way of NGxNSxNE antenna combinations.

**5.** A radar system for the environmental detection of a motor vehicle, having

- transmitting means for emitting transmission signals using NS>=2 transmitting antennas, receiving means for receiving transmission signals reflected off objects using NE>=2 receiving antennas, and
- signal processing means for processing the received signals, wherein
- in each case, only one of the NS transmitting antennas is ready to transmit, wherein from single signal to single signal, the transmitting antenna used can in particular be alternated cyclically, and within each of the NP=N/NS periods of the cyclical transmitting antenna alternation, the temporal progression is at least approximately identical, the NE receiving antennas can be used in order to receive single signals reflected off objects in parallel,

**characterized in that**

- each of the NP received single signals can be accumulated in proper phase for the NSxNE different combinations of transmitting and receiving antennas to multiple relative speed hypotheses of objects, and
- by way of said NSxNE accumulated values, each belonging to the same relative speed hypothesis, from different combinations of transmitting and receiving antennas a digital beam forming can be carried out, and those phase differences which arise between the receive signals to the different transmitting antennas due to the temporal offset thereof because of the cyclical transmitting antenna alternation, and which depend on the respective relative speed hypothesis, can thereby be taken into consideration, wherein the signal processing means are further configured to execute a method of Claims 1 to 4.

**Revendications**

**1.** Procédé de détection de l'environnement d'un véhicule automobile, comprenant les étapes suivantes :

- diffusion de signaux d'émission par NS≥2 antennes d'émission, les signaux d'émission concernés étant constitués par une séquence de N signaux individuels identiques ou similaires,
- réception par NE>=2 antennes de réception de signaux d'émission réfléchis par des objets, et
- traitement des signaux reçus,

où

- l'émission n'est effectuée à chaque fois que sur une seule des NS antennes d'émission, l'antenne d'émission utilisée étant cycliquement commutée d'un signal individuel à l'autre et le déroulement temporel étant au moins sensiblement identique à l'intérieur de chacune des NP=N/NS périodes de la commutation cyclique d'antennes d'émission, et toutes les NE antennes de réception concernées étant utilisées en parallèle pour la réception de signaux individuels réfléchis par des objets,

**caractérisé en ce que**

- les NP signaux individuels respectivement reçus pour les NSxNE combinaisons différentes d'antennes d'émission et d'antennes de réception sont accumulés en phase pour former plusieurs hypothèses de vitesse relative d'objets,
- une formation de faisceau numérique est effectuée au moyen desdites NSxNE valeurs accumulées des combinaisons différentes d'antennes d'émission et d'antennes de réception respectivement associées à une même hypothèse de vitesse relative, et les différences de phase présentées entre les signaux de réception par rapport aux différentes antennes d'émission du fait de leur décalage temporel en raison de la commutation cycliques des antennes d'émission, et qui dépendent de l'hypothèse de vitesse relative correspondante sont prises en compte,

- les NSxNP signaux d'émission considérés sont au moins sensiblement compris dans une trame temporellement équidistante,

- l'accumulation en phase des NP signaux individuels respectivement reçus pour les NSxNE combinaisons différentes d'antennes d'émission et d'antennes de réception est exécutée au moyen d'une transformée de Fourier discrète (DFT), chaque noeud de fréquence de la DFT correspondant à un groupe d'hypothèses de vitesse relative équidistantes,

- une formation de faisceau numérique au moyen des NSxNE valeurs DFT d'un noeud de fréquence respectif étant effectuée plusieurs fois avec différentes différences de phase, puisque différentes hypothèses sont présentées pour les différences de phase entre les signaux de réception par rapport aux différentes antennes d'émission pour chaque noeud de fréquence NS, lesquelles sont distinguables dans une plage d'unicité de phase limitée de 360°, lesdites différentes hypothèses de différence de phase correspondant à différents sous-groupes d'hypothèses de vitesse relative de ces noeuds de fréquence,

- où, dans une première alternative, parmi les différentes hypothèses de différence de phase d'un noeud de fréquence DFT, est sélectionnée celle pour laquelle le résultat de la formation de faisceau numérique est le mieux adapté à l'hypothèse d'un objet ponctuel individuel, ou,

- dans une deuxième alternative, parmi les différentes hypothèses de différence de phase d'un noeud de fréquence DFT, est sélectionnée celle présentant le maximum absolu pour le résultat de la formation de faisceau numérique, ou,

- dans une troisième alternative, parmi les différentes hypothèses de différence de phase, l'hypothèse correcte est déterminée **en ce que** les différentes hypothèses de vitesse relative correspondantes sont comparées à la variation de la distance mesurée de l'objet et/ou à la vitesse relative déjà connue de l'objet sur deux cycles de mesure ou plus, ou,

- dans une quatrième alternative, la distance des différents signaux d'émission varie d'un cycle de mesure à l'autre et, parmi les différentes hypothèses de différence de phase, l'hypothèse correcte est déterminée **en ce que** les différentes hypothèses de vitesse relative variables correspondantes sont comparées entre elles sur deux cycles de mesure.

2. Procédé selon la première ou la deuxième alternative de la revendication 1, où seule l'hypothèse de différence de phase sélectionnée d'un noeud de fréquence DFT et le sous-groupe d'hypothèses de vitesse relative correspondant continuent à être pris en considération.

3. Procédé selon l'une quelconque des revendications précédentes, où

- la fréquence des signaux individuels diffusés est modulée linéairement,

- chacun des NP signaux individuels reçus pour les NSxNE combinaisons différentes d'antennes d'émission et d'antennes de réception est balayé NA fois dans la trame équidistante, et une première DFT est formée au moyen desdites NA valeurs de balayage, et

- une deuxième DFT est déterminée pour chaque noeud de fréquence de cette première DFT au moyen des NP signaux de réception respectifs, chaque noeud de fréquence deuxième DFT correspondant à un groupe d'hypothèses de vitesse relative équidistantes.

4. Procédé selon l'une quelconque des revendications précédentes, où sont présentés NS>=2 groupes de NG>=2 antennes d'émission simultanément mises en service et à modulation de signal entre elles, séparées par démodulation de signaux de réception provenant de différentes antennes d'émission simultanément mises en service et où la formation de faisceau numérique est effectuée par NGxNSxNE combinaisons d'antennes.

5. Système radar pour la détection de l'environnement d'un véhicule automobile, comprenant

- des moyens d'émission pour la diffusion de signaux d'émission par NS≥2 antennes d'émission, des moyens de réception pour la réception par NE>=2 antennes de réception de signaux d'émission réfléchis par des objets, et

- des moyens de traitement de signaux pour traiter les signaux reçus,

où

- une seule des NS antennes d'émission est apte à émettre, l'antenne d'émission utilisée étant en particulier cycliquement commutée d'un signal individuel à l'autre et le déroulement temporel étant au moins sensiblement identique à l'intérieur de chacune des NP=N/NS périodes de la commutation cyclique d'antennes d'émission, les NE antennes de réception étant utilisables pour la réception parallèle de signaux individuels réfléchis par des objets,

**caractérisé en ce que**

- les NP signaux individuels respectivement reçus pour les NSxNE combinaisons différentes d'antennes d'émission et d'antennes de réception sont accumulables en phase pour former plusieurs hypothèses de vitesse relative d'objets, et
- une formation de faisceau numérique peut être effectuée au moyen desdites NSxNE valeurs accumulées des combinaisons différentes d'antennes d'émission et d'antennes de réception respectivement associées à une même hypothèse de vitesse relative, et les différences de phase présentées entre les signaux de réception par rapport aux différentes antennes d'émission du fait de leur décalage temporel en raison de la commutation cycliques des antennes d'émission, et qui dépendent de l'hypothèse de vitesse relative correspondante peuvent être prises en compte, les moyens de traitement de signaux étant en outre prévus pour exécuter un procédé selon l'une des revendications 1 à 4.

Fig. 1

Fig. 2

$f_{Senden}$

$f_{Empfangen}$ (ohne vergleichsweise sehr kleine Dopplerverschiebung)

| k: | | 0 | | | 1 | | | 511 | |
| m: | 0,1,2,3 | 4,5,6,7 | 0,1,2,3 | 0,1,2,3 | 4,5,6,7 | 4,5,6,7 | | 4,5,6,7 | |
| TX: | 0 | 1 | 0 | 1 | 1 | | 1 | |
| RX: | 0,1,2,3 | 0,1,2,3 | 0,1,2,3 | 0,1,2,3 | 0,1,2,3 | | 0,1,2,3 | |

$\Delta f$

$\Delta t$

25.6µs

32µs

187.5MHz

Abtastung (256 Werte)

0    40    80    120    160    20480   t/µs

Fig. 3

Fig. 4

**Fig. 5**

Objekt

$r_{RP}$

$\alpha_{Az} < 0$

$\alpha_{Az}$

$\sin(-\alpha_{Az})(a+4d)$

$\sin(-\alpha_{Az})(a+2.5d)$

a    d/2    d    d    d    d/2

RP    TX0 RX0    RX1    RX2    RX3 TX1

$d = \lambda/2$

Fig. 6

d=λ/2

TX0

RX0 RX1 RX2 RX3 RX4 RX5 RX6 RX7

Fig. 7a

Fig. 7b

Fig. 8a

Fig. 8b

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 000002294451 A2
- WO 2010066458 A1
- DE 102011009874 B3
- DE 102009016480 A1

**In der Beschreibung aufgeführte Nicht-Patentliteratur**

- **DOMINIK ZOEKE.** Phase Migration Effects in Moving Target Localizaion Using Switched MIMO Arrays. *Proceedings of the 12th European Radar Conference*